# EUROPEAN PATENT APPLICATION

(11) **EP 3 964 108 A1**
(43) Date of publication of application: **09.03.2022**
(21) Application number: 21187857.4
(22) Date of filing: 27.07.2021
(51) Int. Cl.: A47J 43/07

(54) **A SMALL KITCHEN APPLIANCE HAVING A HIDDEN ACTUATION MEANS**

(30) Priority: 20.08.2020 TR 202013194
(71) Applicant: Arçelik Anonim Sirketi, 34445 Istanbul (TR)
(72) Inventor: HIZAR, Ogun, 34445 ISTANBUL (TR); AVCI, Cem, 34445 ISTANBUL (TR); DONMEZ, Ersin, 34445 ISTANBUL (TR); SINIRLIOGLU, Sercan, 34445 ISTANBUL (TR)

(57) **Abstract**

The present invention relates to a small kitchen appliance (1) comprising a body (2) having a motor and a switch (3) for turning on/off the motor; a receptacle (4) which is seated onto the body (2) and wherein the foodstuffs to be processed can be placed; a shaft (5) which extends from the base of the receptacle (4) upwards and which can be rotated by the motor; a transfer means (6) which, when a force is exerted thereon, transfers said force to the switch (3) so as to close the switch (3); a chopping/mixing apparatus (10) which can be fixed to the shaft (5) so as to rotate together with the shaft (5) and which has a hole (11) on the upper surface thereof; and a cover (18) having a protrusion (19) which can shift to a pressed position by moving so as to enter the hole (11) of the chopping/mixing apparatus (10) fixed to the shaft (5) when the cover (18) is closed onto the body (2).

## Description

The present invention relates to a small kitchen appliance having a hidden actuation means.

The power control of electrical kitchen appliances having a motorized body and a receptacle wherein the food to be processed is placed is usually performed with buttons on the body. Taking into account the ease of use and ergonomic reasons, it is preferred to control small kitchen appliances from the top of the appliance, for example by a button on the cover. Moreover, in order to prevent undesirable situations such as injuries in the kitchen, the kitchen appliances with chopping and/or mixing functions with high-speed rotational movement are required to be operated in a safe manner.

In newly-developed small kitchen appliances having a receptacle, embodiments wherein the receptacle is disposed on the motor contrary to previous designs have become widespread. For example, small household appliances which can be wirelessly operated by means of induction must be positioned on a surface comprising a primary coil and serving as a power source. Said wireless appliances comprise a secondary coil on the part of the body close to the base and receive the required energy for operation by means of the electromagnetic interaction between the primary coil and the secondary coil. Therefore, for kitchen appliances wherein the body is positioned below while the receptacle is disposed on the top, alternative actuation solutions are required for operating the appliance in a safe and simple manner.

In the state of the art United States Patent Application No. US7028930B2, a kitchen appliance is disclosed, comprising a body having a motor and a receptacle disposed on the body. The kitchen appliance comprises a safety lock which allows the operation of the motor only when the cover is closed.

In the state of the art Chinese Patent Application No. CN209058941 U, a kitchen appliance is disclosed, comprising a body having a motor and a receptacle disposed on the body as well as an actuation mechanism for safety purposes.

The aim of the present invention is the realization of a small kitchen appliance which can be operated from the cover in a safe and simple manner. Another aim of the present invention is the realization of a small kitchen appliance wherein the operation thereof is prevented if the receptacle or the chopping/mixing apparatus thereof is not properly placed or the cover thereof is not closed. Another aim of the present invention is the realization of a small kitchen appliance with improved safety, allowing symmetrical receptacle design. Another related aim of the present invention is the realization of a small kitchen appliance which can be wirelessly operated and of which the power control can be performed from the cover.

The small kitchen appliance realized in order to attain the aim of the present invention, explicated in the first claim and the respective claims thereof, comprises a body having a motor and a switch for turning on/off the motor; a receptacle which is seated onto the body and wherein the foodstuffs to be processed can be placed; a shaft which extends from the base of the receptacle upwards and which can be rotated by the motor; a transfer means which, when a force is exerted thereon, transfers said force to the switch so as to close the switch; a chopping/mixing apparatus which can be fixed to the shaft so as to rotate together with the shaft and which has a hole on the upper surface thereof; and a cover having a protrusion which can shift to a pressed position by moving so as to enter the hole of the chopping/mixing apparatus fixed to the shaft when the cover is closed onto the body.

In a preferred embodiment of the present invention, the chopping/mixing apparatus comprises an actuation means which is configured to move towards the body and actuate the transfer means as a result of the force exerted by the protrusion in the pressed position. Therefore, when a certain force is applied on the small kitchen appliance, the protrusion moves towards the body. While moving, the protrusion moves the actuation means, which enables the actuation means to move the transfer means such that the switch is closed and the motor is operated.

Unless it is stated otherwise, it is accepted throughout the description in a manner compatible with the figures that the surface (not shown in the figures) whereon the base of the body, and hence the kitchen appliance stands is accepted as the lower horizontal plane. Accordingly, when the components are fixed in a proper manner, the body is positioned below, the receptacle in the middle, and the cover on the top. Thus, while the operation of the appliance can be easily controlled from the cover, the motor and the power circuits can be positioned at the lower side of the appliance. Consequently, the appliance can be wirelessly operated by means of induction.

The chopping/mixing apparatus is preferably configured to be fitted over the shaft so as to be fixed to the shaft. The chopping/mixing apparatus can have a cylindrical or cylinder-like form.

In an embodiment of the present invention, the chopping/mixing apparatus is configured to completely surround the part of the shaft in the receptacle when fixed to the shaft. Thus, the leakproofing between the receptacle and the receptacle base and the body is improved such that the foodstuffs and liquids in the receptacle are prevented from getting into contact with electronic components.

In a preferred embodiment of the present invention, the actuation means is provided in the chopping/mixing apparatus. Thus, the need for securing, attaching and detaching the actuation means by itself is eliminated. Since the actuation means is attached/detached as the apparatus is attached to/detached from the shaft, actuation cannot be performed when the chopping/mixing apparatus is not attached to the shaft, thus preventing the operation of the appliance.

The actuation means can be provided as detachable from the chopping/mixing apparatus. The actuation means can be easily maintained, repaired or replaced by providing the same outside the shaft group and/or allowing the same to be detachable from the apparatus.

Like the chopping/mixing apparatus, the actuation means can have a cylinder-like form. In this case, the actuation means and the chopping/mixing apparatus are positioned coaxially.

When the chopping/mixing apparatus is fixed to the shaft, the actuation means is positioned between the wall of the chopping/mixing apparatus and the shaft. By positioning the actuation means around the shaft, it becomes possible to design the receptacle symmetrically and manufacture the entire lateral surface from at least partially translucent material.

In an embodiment of the present invention, the actuation means comprises an inner actuator having a housing wherein the protrusion can be seated, an actuation body which can at least partially grip the shaft, and/or at least one leg which extends from the actuation body so as to mechanically contact the transfer means.

The hole of the chopping/mixing apparatus is preferably wide enough to allow only the passage of the protrusion. This width can be a few millimeters. Thus, even if the apparatus is attached to the shaft, the user cannot operate the actuation means and hence the kitchen appliance unless the cover is closed.

The shaft is borne to the receptacle base so as not to move in the vertical direction. By preventing the vertical movement of the shaft, the mechanical coupling between the same and the motor is not interrupted, providing a mechanically more balanced and simpler structure. The shaft preferably extends from the center of the receptacle base and preferably up to half the height of the receptacle.

The protrusion is preferably aligned with the shaft when the cover is closed onto the receptacle. The protrusion can move in the vertical direction. In a preferred embodiment of the present invention, a button which shifts the protrusion to the pressed positioned when pressed is provided on the upper surface of the cover. The protrusion and/or the button can be disposed at the middle point of the cover, for example at the center of a circular cover.

In an embodiment of the present invention, the small kitchen appliance can be food processor, chopper or mixer. The small kitchen appliance can be an appliance which can be wirelessly operated by means of induction.

A small kitchen appliance realized in order to attain the aim of the present invention is illustrated in the attached figures, where:
Figure 1 - is the schematic perspective view of the components of the small kitchen appliance in an embodiment of the present invention.
Figure 2 - is the cross-sectional view of the chopping/mixing apparatus in an embodiment of the present invention.
Figure 3 - is the cross-sectional view of the receptacle in an embodiment of the present invention.
Figure 4 - is the exploded cross-sectional view of the chopping/mixing apparatus in an embodiment of the present invention.
Figure 5 - is the exploded perspective view of the chopping/mixing apparatus in an embodiment of the present invention.
Figure 6 - is the cross-sectional view of the components in the free position in an embodiment of the present invention.
Figure 7 - is the cross-sectional view of the components in the pressed position in an embodiment of the present invention.

The elements illustrated in the figures are numbered as follows:
1. Kitchen appliance
2. Body
3. Switch
4. Receptacle
5. Shaft
6. Transfer means
7. Inner base
8. Shaft drive bracket
9. Shaft bearing bracket
10. Chopping/mixing apparatus
11. Hole
12. Actuation means
13. Inner actuator
14. Inner actuator spring
15. Inner actuator stopper
16. Blade
17. Additional apparatus
18. Cover
19. Protrusion
20. Button

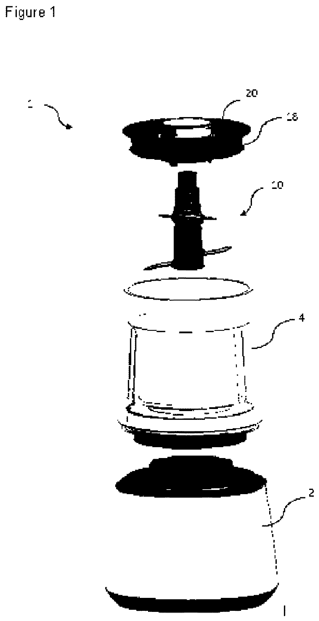

The small kitchen appliance (1) comprises a body (2); a foodstuff receptacle (4) which is seated onto the body (2); a shaft (5) which extends from the base of the receptacle (4) upwards and which can be rotated by the motor; a chopping/mixing apparatus (10) which can be fixed to the shaft (5) so as to rotate together with the shaft (5); and a cover (18) which is closed over the receptacle (4) (Figure 1).

The body (2) comprises a motor and at least one switch (3) for turning on/off the motor. The body (2) also forms the base of the kitchen appliance (1), and is designed so as to allow the kitchen appliance (1) to be positioned on a flat surface in a balanced manner. The switch (3) opens/closes the power transmission line connected to the motor. To this end, components which can be operated by mechanical, magnetic and/or electronic actuation, for example sensors, can be used. When closed, the switch (3) activates the motor power circuit, enabling the motor to be energized by means of an energy source connected to the latter. The switch (3) is preferably positioned in the body (2).

The receptacle (4), wherein solid and/or liquid foodstuffs to be processed, for example to be mixed, chopped, shredded, can be placed, can be safely seated onto the body (2) when placed and pressed onto the body (2). In at least one embodiment of the present invention, the receptacle (4) is in the form of a cylindrical or cylinder-like recipient with an open top surface. The side walls of the receptacle (4) are preferably manufactured at least from translucent material.

When the receptacle (4) is seated onto the body (2), the rotational axes of the shaft (5) and the motor are mechanically connected to each other such that the shaft (5) can rotate around its own axis with the operation of the motor. The mechanical coupling between the motor and the shaft (5) can be realized by means of a shaft drive bracket (8).

The kitchen appliance (1) further comprises a transfer means (6t) which is provided on the base of the receptacle (4) and which, when a certain force is exerted thereon, transfers said force to the switch (3) so as to close the switch (3). In an embodiment of the present invention, the transfer means (6) is an actuation bracket which is mounted to the base of the receptacle (4). The transfer means (6) can move vertically within a certain distance. The transfer means (6), which is in the free position by means of a flexible means, for example at least one trigger spring, when a force is not exerted thereon from above, moves downwards so as to contact the switch (3) when a force is exerted thereon. The transfer means (6) cannot be actuated by the protrusion (19) when the chopping/mixing apparatus (10) is not attached to the shaft (5).

The kitchen appliance (1) comprises at least one chopping/mixing apparatus (10) which can fitted over the shaft (5) so as to be fixed to the same and thus which can rotate together with the shaft (5), which can mix, chop and/or shred the foodstuffs in the receptacle (4) by rotation. A hole (11) is provided on the upper surface of the chopping/mixing apparatus (10). At least one protrusion (19) which can move towards the receptacle (4) is provided on the lower surface of the cover (18). When the cover (18) is closed over the receptacle (4) in case the chopping/mixing apparatus (10) is fixed to the shaft (5), the protrusion (19) moves so as to enter the hole (11) and shift to a pressed position.

In the preferred embodiment of the present invention, the chopping/mixing apparatus (10) comprises an actuation means (12) which is configured to move towards the body (2) and actuate the transfer means (6) as a result of the force exerted by the protrusion (19) in the pressed position.

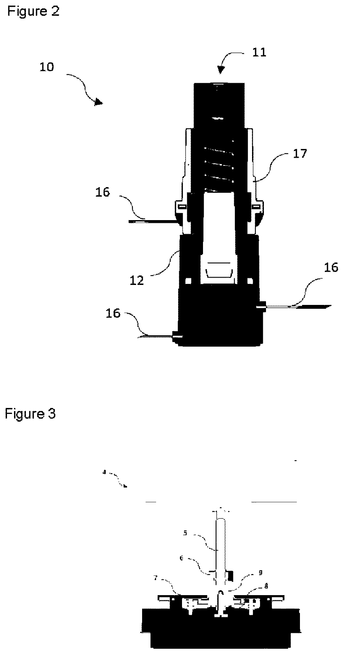

In at least one embodiment of the present invention, the kitchen appliance (1) comprises an inner base (7) which is fixed to the receptacle (4). The inner base (7) forms a surface which contacts the foodstuffs in the receptacle (4) and which provides leakproofing between the receptacle (4) and the body (2). The shaft (5) is fixed to the base of the receptacle (4) by means of a shaft bearing bracket (9) provided on the inner base (7). In this embodiment, the transfer means (6) can move vertically in the direction of the axis by sliding over the shaft bearing bracket (9) (Figure 3).

The chopping/mixing apparatus (10) has a structure, for example a hollow cylindrical or tube-like form which can be fitted over the shaft (5) from the end of the shaft (5) facing the mouth of the receptacle (4). The chopping/mixing apparatus (10) preferably surrounds the part of the shaft (5) extending into the receptacle (4) when fixed to the shaft (5). In the preferred embodiments of the present invention, the actuation means (12) is positioned in the gap inside the chopping/mixing apparatus (10) so as to be easily seen or accessed from the outside (Figure 2). When the chopping/mixing apparatus (10) is fixed to the shaft (5), the actuation means (12) is positioned between the wall of the chopping/mixing apparatus (10) and the shaft (5).

The actuation means (12) may comprise an inner actuator (13) having a housing thereon wherein the protrusion (19) can be seated, an actuation body which can at least partially grip the shaft (5), and at least one leg which extends from the actuation body so as to mechanically contact the transfer means (6). In certain embodiments of the present invention, the actuation means (12) may comprise more than one, for example 2, 3, 4 or 5 legs. Thus, the number of connection points between the actuation means (12) and the transfer means (6) is increased, ensuring a mechanically more balanced and safer actuation.

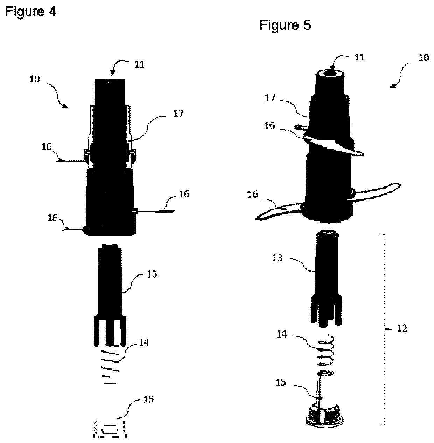

The inner actuator (13) can move vertically in a limited manner. In a preferred embodiment of the present invention, the movement distance of the inner actuator (13) is determined by means of at least one inner actuator spring (14) and at least one inner actuator stopper (15) thereof. The inner actuator (13) is kept in the unpressed position by the at least one inner actuator spring (14) when no force is exerted thereon, and, when pressed from above, moves downwards so as to shift to the pressed position such that the actuator body bears against the inner actuator stopper (15). When the force thereon is removed, the inner actuator spring (14) enables the inner actuator (13) to return to the unpressed position (Figure 4, Figure 5).

The transfer means (6) may comprise a cylindrical body having an upper surface contacting, for example, at least one inner actuator leg, and at least one arm for actuating the switch (3). In this embodiment, the transfer between the inner actuator (13) and the transfer means (6) as well as the actuation and closing of the at least one switch (3) can be performed at one ore more points, for example at 2, 3, 4 or 5 points. The transfer means (6) can open/close the switch (3) by direct contact or indirect actuation. The movement of the transfer means (6) in the receptacle (4) is preferably limited to vertical direction, and prevented in the horizontal or rotational direction.

The chopping/mixing apparatus (10) comprises at least one blade (16) which, when the chopping/mixing apparatus (10) is attached to the shaft (5) extends from the body of the latter towards the side walls of the receptacle (4), and which is used for chopping and/or mixing the foodstuffs. Said blade (16) may extend directly from the body of the apparatus (10) or may be positioned on an additional apparatus (17) which can be fitted over the body. The additional apparatus (17) may be, for example, an upper chopper comprising at least one blade which is fitted over the chopping/mixing apparatus (10).

The cover (18), which covers the mouth of the receptacle (4), has the same form as the mouth of the cover (4), for example is circular. In at least one embodiment of the present invention, the protrusion (19) on the cover (18) aligns with the shaft (5) when the cover (18) is closed over the receptacle (4) so as to move in the vertical direction. A button (20) which shifts the protrusion (19) to the pressed position when pressed may be provided on the upper surface of the cover (18). The kitchen appliance (1) comprises a guide, for example a guiding spring, which keeps the button (20) and the protrusion (19) in the unpressed position when the button (20) is not pressed. The button (20) may be any mechanical, electronic and/or magnetic structure in form of a button, arm, etc. which can move the protrusion (19) downwards from the upper side of the cover (18). In at least one embodiment of the present invention, the actuation and power control of the motor are performed by a single button (20).

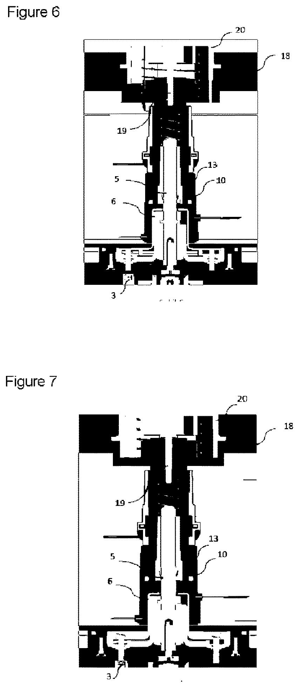

In line with the description above, in an embodiment of the present invention, the operation of the small kitchen appliance (1) is realized as follows (it is assumed that the motor is energized by an active power source): By seating the receptacle (4) onto the body (2), the mechanical coupling between the shaft (5) and the motor is provided. After the chopping/mixing apparatus (10) is fixed onto the shaft (5), the actuation means (12) shifts to a position so as to transfer a force exerted thereon to the transfer means (6). When the cover (18) is closed over the receptacle (4), the moving protrusion (19) passes through the hole (11) and shifts to a position so as to exert a force on the actuation means (12) from above. In case no force is exerted onto the button (20) from over the cover (18), said components are in the free, in other words unpressed, position and the motor is not operated (Figure 6). When the button (20) is pressed from over the cover (18), the protrusion (19), the inner actuator (13) and the transfer means (6) shift to the pressed position in this order such that the switch (3) is closed and the motor is operated (Figure 7).

When the button (20) shifts to the unpressed position, for example as the user removes his/her hand from the button (20), the protrusion (19), the inner actuator (13) and the transfer means (6) return to the free position such that the switch (3) is opened and the motor stops.

The small kitchen appliance (1) can be any motorized kitchen appliance with the receptacle (4) thereof being placed onto the body (2) thereof, for example a food processor, chopper or mixer.

In certain embodiments of the present invention, the small kitchen appliance (1) is a wireless appliance energized by means of induction. In these embodiments, the body (2) comprises at least one secondary coil, an AC/DC converter and other power and control circuits.

The small kitchen appliance (1) of the present invention cannot be operated when the chopping/mixing apparatus (10) or the cover (18) is not in place by means of the hidden actuation means (12). Thus, threats and damages which may occur due to the unintentional or uncontrolled operation of the kitchen appliance (1) are prevented. By positioning the actuation means (12) around the shaft (5), a fixed and rigid shaft (5) can be used such that the mechanical strength of the shaft (5) is increased and moreover a symmetrical receptacle (4) is realized.

## Claims

1. A small kitchen appliance (1) comprising a body (2) having a motor and a switch (3) for turning on/off the motor; a receptacle (4) which is seated onto the body (2) and wherein the foodstuffs to be processed can be placed; a shaft (5) which extends from the base of the receptacle (4) upwards and which can be rotated by the motor; a transfer means (6) which, when a force is exerted thereon, transfers said force to the switch (3) so as to close the switch (3); a chopping/mixing apparatus (10) which can be fixed to the shaft (5) so as to rotate together with the shaft (5) and which has a hole (11) on the upper surface thereof; and a cover (18) having a protrusion (19) which can shift to a pressed position by moving so as to enter the hole (11) of the chopping/mixing apparatus (10) fixed to the shaft (5) when the cover (18) is closed onto the body (2), **characterized in that** the chopping/mixing apparatus (10) comprises an actuation means (12) which is configured to move towards the body (2) and actuate the transfer means (6) as a result of the force exerted by the protrusion (19) in the pressed position.

2. A small kitchen appliance (1) as in Claim 1, **characterized by** a cylindrical chopping/mixing apparatus (10).

3. A small kitchen appliance (1) as in Claim 1 or 2, **characterized by** the chopping/mixing apparatus (10) which surrounds the part of the shaft (5) extending into the receptacle (4) when fixed to the shaft (5).

4. A small kitchen appliance (1) as in any one of the above claims, **characterized in that** the actuation means (10) is disposed in the chopping/mixing apparatus (10).

5. A small kitchen appliance (1) as in any one of the above claims, **characterized by** the actuation means (12) which is positioned between the wall of the chopping/mixing apparatus (10) and the shaft (5) when the chopping/mixing apparatus (10) is fixed to the shaft (5),

6. A small kitchen appliance (1) as in any one of the above claims, **characterized by** the actuation means (12) comprising an inner actuator (13) having a housing wherein the protrusion (19) can be seated, an actuation body which can at least partially grip the shaft (5), and at least one leg which extends from the actuation body so as to mechanically contact the transfer means (6).

7. A small kitchen appliance (1) as in any one of the above claims, **characterized by** the chopping/mixing apparatus (10) having the hole (11) which is wide enough to allow only the passage of the protrusion (19).

8. A small kitchen appliance (1) as in any one of the above claims, **characterized by** the shaft (5) which is borne onto the base of the receptacle (4) so as not to move in the vertical direction.

9. A small kitchen appliance (1) as in any one of the above claims, **characterized by** the protrusion (19) which aligns with the shaft (5) when the cover (18) is closed over the receptacle (4) so as to move in the vertical direction.

10. A small kitchen appliance (1) as in any one of the above claims, **characterized by** a button (20) which is provided on the upper surface of the cover (18) and which shifts the protrusion (19) to the pressed position when pressed.

11. A small kitchen appliance (1) as in any one of the above claims, which is a foot processor, chopper or mixer.

12. A small kitchen appliance (1) as in any one of the above claims, which can be wireleslly operated by means of induction.
